# EUROPÄISCHE PATENTSCHRIFT

(11) **EP 4 282 248 B1**
(45) Veröffentlichungstag und Bekanntmachung des Hinweises auf die Patenterteilung: **30.09.2026**
(21) Anmeldenummer: 23174845.0
(22) Anmeldetag: 23.05.2023
(51) Int. Cl.: A01F 15/07

(54) **RUNDBALLENPRESSE**
ROUND BALER
PRESSE À BALLES RONDES

(30) Priorität: 23.05.2022 DE 102022112955
(43) Veröffentlichungstag der Anmeldung: 29.11.2023
(73) Patentinhaber: Maschinenfabrik Bernard Krone GmbH & Co. KG, 48480 Spelle (DE)
(72) Erfinder: Horstmann, Dr. Josef, 49479 Ibbenbüren (DE)

(56) Entgegenhaltungen:
- EP-A1- 0 350 514
- EP-A1- 2 556 744
- EP-B1- 2 196 082
- DE-A1- 102005 020 777
- DE-A1- 102018 003 709
- DE-A1- 19 932 336

## Beschreibung

Die vorliegende Erfindung betrifft eine Rundballenpresse nach dem Oberbegriff von Anspruch 1.

Rundballenpressen werden in der Landwirtschaft eingesetzt, um Erntegut wie z.B. Heu oder Stroh aufzunehmen und zu Ballen zu verpressen. Das Erntegut wird (z.B. durch eine Pick-up) vom Boden aufgenommen, weitergefördert, normalerweise zerkleinert (z.B. mittels eines Schneidrotors) und schließlich in einer Presskammer zu runden Erntegutballen verpresst. Dort wirken Presselemente auf das Erntegut ein, die auch als Förderelemente wirken und eine umlaufende Bewegung des Ernteguts erzeugen. Der fertige Ballen wird in einem Bindevorgang mit einem Bindematerial umwickelt. Als Bindematerial können Schnüre, Netze oder (z.B. im Falle von Gras) Folien verwendet werden, wobei letztere auch außerhalb der Rundballenpresse in einem hiervon separaten Ballenwickelgerät appliziert werden können. Nach dem Binden innerhalb der Presskammer wird der Ballen ausgeworfen. Erst danach kann die Presskammer wieder zur Bildung eines neuen Ballens genutzt werden. Es entsteht somit ein erheblicher Zeitraum, innerhalb dessen kein Erntegut verarbeitet werden kann. Dies bedeutet normalerweise, dass die Erntegutaufnahme so lange unterbrochen werden muss. D.h. die Rundballenpresse muss für den Binde- und Auswurfvorgang anhalten, welcher typischerweise ca. ein Drittel der gesamten Einsatzzeit beansprucht, was die Produktivität wesentlich beeinträchtigt.

Es ist daher im Stand der Technik bereits vorgeschlagen worden, einen Zwischenspeicher für Erntegut vorzusehen, der gefüllt wird, wenn kein Erntegut verarbeitet werden kann, und beim nächsten Ballenbildungsvorgang wieder geleert wird. Die vorgeschlagenen Lösungen wurden allerdings entweder nicht zur Serienreife geführt oder haben sich nicht durchsetzen können. Z.T. sind die zugrundeliegenden Mechanismen zu komplex.

Die Druckschrift Die Druckschrift EP 2 556 744 A1 offenbart beispielsweise eine kontinuierlich arbeitende Rundballenpresse mit einer Presskammer und einem Speicherraum zum phasenweisen Zwischenspeichern von Erntegut.

Aufgabe der Erfindung ist es, verbesserte Mittel bereitzustellen, die einer Rundballenpresse eine kontinuierliche Erntegutaufnahme ermöglichen.

Die Aufgabe wird gelöst mit einer Rundballenpresse mit den Merkmalen des unabhängigen Patentanspruchs 1. Vorteilhafte Ausführungsformen sind den abhängigen Ansprüchen entnehmbar.

Dafür wird eine Rundballenpresse geschaffen, aufweisend einen zu einer Presskammer führenden Zuführkanal, eine antreibbare Übergabevorrichtung, die dazu eingerichtet ist, in einem Pressmodus Erntegut durch den Zuführkanal in Richtung der Presskammer zu fördern, sowie eine Speichervorrichtung mit einem Speicherraum zur Zwischenspeicherung von Erntegut.

Die Rundballenpresse ist zum Pressen von landwirtschaftlichem Erntegut zu Rundballen ausgebildet, wobei der eigentliche Pressvorgang in einer Presskammer erfolgt. Bei dem landwirtschaftlichen Erntegut kann es sich insbesondere um Halmgut wie Gras, Stroh oder Heu handeln. Der Begriff "Rundballenpresse" schließt hierbei ausdrücklich auch Maschinen ein, die zusätzlich zu einem Pressen des Ernteguts zu Ballen auch ein Binden und/oder Verpacken der Ballen durchführen. Das Erntegut kann mit einer Aufnahmevorrichtung, insbesondere einer Pick-up, aufgenommen und durch den Zuführkanal werden in Richtung der Presskammer gefördert werden. Zum Fördern kann die Rundballenpresse wenigstens eine Fördervorrichtung aufweisen, z.B. einen Förderrotor oder einen Schneidrotor, der das Erntegut nicht nur weiterfördert, sondern auch schneidet. In jedem Fall durchläuft der Erntegutstrom den Zuführkanal, bevor er zur Presskammer gelangt. Der Zuführkanal ist zur Führung des Ernteguts ausgebildet, wobei er nicht notwendigerweise vollständig geschlossen ausgebildet sein muss.

Die Ausbildung der Presskammer ist im Rahmen der Erfindung nicht festgelegt. So kann es sich um eine Presskammer mit fester oder variabler Größe handeln. Im ersteren Fall kann die Rundballenpresse eine Mehrzahl von Presswalzen aufweisen, die um bezüglich eines Rahmens stationäre Drehachsen drehbar sind. Im letzteren Fall ist die Presskammer wenigstens teilweise durch ein endloses, umlaufend antreibbares Presselement definiert, wobei es sich um ein oder mehrere endlose Pressriemen oder -gurte handeln kann oder z.B. einen Kettenstabförderer.

Die Rundballenpresse weist eine Übergabevorrichtung auf, wobei diese Bezeichnung nicht einschränkend auszulegen ist. Allgemein dient die Übergabevorrichtung zumindest im Pressmodus dazu, Erntegut an die Presskammer zu übergeben, indem sie dieses durch den Zuführkanal in Richtung der Presskammer fördert. Insofern kann die Übergabevorrichtung auch als eine Fördervorrichtung angesehen werden. Die Übergabevorrichtung ist antreibbar, wobei sie zumindest zeitweise im Pressmodus angetrieben ist. Die Antriebskraft kann z.B. mechanisch, elektrisch, hydraulisch, elektrohydraulisch oder in anderer Weise erzeugt werden. Der Pressmodus kann auch als Ballenbildungsmodus bezeichnet werden und kennzeichnet denjenigen Arbeitsmodus der Rundballenpresse, in welchem Erntegut der Presskammer sukzessive zugeführt wird, wobei ein Erntegutballen geformt und gepresst wird.

Außerdem weist die Rundballenpresse eine Speichervorrichtung auf, mit einem Speicherraum zur Zwischenspeicherung von Erntegut. Der Speicherraum dient also dazu, Erntegut zwischenzeitlich aufzunehmen. Wie nachfolgend noch erläutert wird, ist dies insbesondere für die Zeit vorgesehen, wenn ein Erntegutballen fertiggestellt wurde. Bevor mit der Bildung des nächsten Ballens begonnen werden kann, muss der fertiggestellte Ballen gebunden und ausgeworfen werden. Statt die Erntegutaufnahme in dieser Zeit zu unterbrechen, kann Erntegut im Speicherraum der Speichervorrichtung zwischengespeichert und für die nächste Ballenbildung wieder abgegeben und der Presskammer zugeführt werden.

Die Speichervorrichtung weist eine Speicherwandung auf, die den Speicherraum nach außen begrenzt, welcher über wenigstens eine Speicheröffnung mit dem Zuführkanal in Verbindung steht, sowie einen antreibbaren Speicherförderer zum umlaufenden Fördern von Erntegut innerhalb des Speicherraums, wobei die Speichervorrichtung dazu vorgesehen ist, in einem Speichermodus Erntegut aus dem Zuführkanal über wenigstens eine Speicheröffnung aufzunehmen und im Pressmodus Erntegut über wenigstens eine Speicheröffnung an den Zuführkanal abzugeben.

Die Speicherwandung ist bevorzugt starr ausgebildet und positionsfest mit einem Rahmen der Rundballenpresse verbunden. Hier und im Folgenden ist mit "Rahmen" derjenige Teil der Rundballenpresse bezeichnet, der gewissermaßen ihre Grundstruktur bildet und ihr insgesamt Stabilität verleiht. Am Rahmen sind über eine geeignete Aufhängung auch die Laufräder der Rundballenpresse angebunden, ebenso wie - im Falle einer gezogenen Ausgestaltung - eine Deichsel. Außerdem weist der Rahmen typischerweise ein Gehäuse auf, das die innenliegenden Teile nach außen abschirmt. Die Speicherwandung ist typischerweise aus Metall, z.B. Stahlblech, ausgebildet. Sie begrenzt den Speicherraum nach außen und definiert somit dessen äußere Dimensionen, was allerdings nicht bedeutet, dass sie ihn vollständig, insbesondere lückenlos, umgibt. Sie sorgt dafür, dass Erntegut nicht unkontrolliert aus dem Speicherraum entweichen kann, wobei allerdings ein teilweises Entweichen je nach Ausgestaltung akzeptabel sein kann.

Der Speicherraum steht über wenigstens eine Speicheröffnung mit dem Zuführkanal in Verbindung. Die jeweilige Speicheröffnung ist bevorzugt in der Speicherwandung ausgebildet. Die Verbindung zum Zuführkanal muss nicht unmittelbar gegeben sein, d.h. der Zuführkanal muss sich nicht unmittelbar jenseits der Speicheröffnung an den Speicherraum anschließen, sondern es könnte z.B. auch ein Verbindungskanal zwischengeordnet sein. In jedem Fall ist durch die wenigstens eine Speicheröffnung ein Austausch von Erntegut zwischen dem Zuführkanal und dem Speicherraum möglich. Die jeweilige Speicheröffnung kann verschließbar ausgebildet sein, bevorzugt ist sie allerdings dauerhaft geöffnet. Bevorzugt ist genau eine Speicheröffnung vorgesehen.

Des Weiteren weist die Speichervorrichtung einen antreibbaren Speicherförderer auf, der zum umlaufenden Fördern von Erntegut innerhalb des Speicherraums ausgebildet ist. Der Speicherförderer kann z.B. mechanisch, elektrisch, hydraulisch, elektrohydraulisch oder in anderer Weise antreibbar sein. Er ist dazu ausgebildet, das Erntegut umlaufend zu fördern, also nach Art eines Umlaufförderers oder Kreisförderers. Im Großen und Ganzen wird das Erntegut also auf einer ringartig geschlossenen Bahn durch den Speicherraum gefördert, wenngleich die exakte Bewegungsbahn einzelner Stücke des Ernteguts u.U. nicht geschlossen ist. Da der Speicherförderer das Erntegut innerhalb des Speicherraums fördert, ist er selbst wenigstens teilweise im Speicherraum angeordnet.

Die Speichervorrichtung ist dazu vorgesehen, in einem Speichermodus Erntegut aus dem Zuführkanal über wenigstens eine Speicheröffnung aufzunehmen und im Pressmodus Erntegut über wenigstens eine Speicheröffnung an den Zuführkanal abzugeben. Der Speichermodus könnte auch als Bindemodus, Auswurfmodus oder Binde-und-Auswurfmodus bezeichnet werden, da dieser Modus gewählt werden kann, während der Erntegutballen gebunden und/oder ausgeworfen wird, so dass der Presskammer kein Erntegut zugeführt werden kann. In diesem Speichermodus ist vorgesehen, dass Erntegut aus dem Zuführkanal über wenigstens eine Speicheröffnung (bevorzugt: die Speicheröffnung) in den Speicherraum der Speichervorrichtung gelangt. Dort kann es zwischengespeichert werden, während es durch den Speicherförderer umlaufend gefördert wird. Wenn der Binde- und Auswurfvorgang beendet ist, kann der Presskammer wieder Erntegut zugeführt werden und die Rundballenpresse kann wieder in den Pressmodus wechseln. Das zuvor zwischengespeicherte Erntegut kann dann über wenigstens eine Speicheröffnung (bevorzugt: die Speicheröffnung) an den Zuführkanal abgegeben werden.

Erfindungsgemäß weist der Speicherförderer ein Speicherförderer-Innenteil mit einer den Speicherraum nach innen begrenzenden Fördererwandung auf sowie vom Speicherförderer-Innenteil zur Speicherwandung hin abragende Speicherzinken. Dabei wirkt eine Antriebskraft und/oder ein Antriebsdrehmoment des Speicherförderers in aller Regel auf das Speicherförderer-Innenteil, welches seinerseits als Träger für die Speicherzinken wirkt und diese mit bewegt. Die Fördererwandung des Speicherförderer-Innenteils liegt der Speicherwandung gewissermaßen gegenüber und definiert mit dieser zusammen den Speicherraum, der dem Erntegut zur Verfügung steht. Die Speicherzinken bilden dabei Förderelemente bzw. Förderorgane, die die Antriebskraft des Speicherförderers auf das Erntegut übertragen und dieses zu der umlaufenden Bewegung antreiben. Man kann auch sagen, dass die Speicherzinken das Erntegut vor sich her schieben. In aller Regel ist jeder Speicherzinken in sich starr ausgebildet, wenngleich eine gewisse Elastizität möglich ist. Typischerweise bestehen die Speicherzinken aus Metall, bspw. Stahl. Der Begriff "Zinken" ist hinsichtlich der Form nicht einschränkend auszulegen. Eine typische Bauform sieht allerdings vor, dass wenigstens ein Teil des Speicherzinkens flächig, bspw. aus Metallblech, ausgebildet ist, wobei die Schmalseite des Zinkens in Bewegungsrichtung zeigt. Ein derart orientiertes Metallblech kann allerdings auch einen Basisabschnitt des Zinkens bilden, mit dem ein Aufsatz verbunden, bspw. verschweißt, ist. Der Aufsatz kann seinerseits durch einen Blechstreifen gebildet sein, dessen Schmalseite allerdings im Winkel, bspw. im rechten Winkel, zur Bewegungsrichtung orientiert ist. Bei dieser Ausgestaltung kann der Aufsatz den Basisabschnitt gewissermaßen abschirmen und vor Verschleiß schützen. Außerdem können sich Aufsatz und Basisabschnitt gegenseitig mechanisch stabilisieren, so dass sich mit weniger Material ein insgesamt stabilerer Speicherzinken realisieren lässt.

Die erfindungsgemäße Rundballenpresse ermöglicht u.U. eine ununterbrochene Erntegutaufnahme, so dass ein Anhalten zum Binden und/oder Auswerfen des Ballens unnötig ist. Vor allem bedeutet dies einen Zeitvorteil, da die genannten Vorgänge einen wesentlichen Anteil der Gesamtzeit zur Bereitstellung eines Erntegutballens beanspruchen (bspw. ca. ein Drittel, während die übrigen zwei Drittel für die Ballenbildung benötigt werden). Unter Umständen kann auch der Energieverbrauch gesenkt werden, da das Anhalten und erneute Anfahren für jeden Bindevorgang entfallen. Die Ausgestaltung der Speichervorrichtung mit einem nach Art eines Umlaufförderers arbeitenden Speicherförderer bietet dabei besondere Vorteile. Das Erntegut kann an einer Stelle, im Bereich einer Speicheröffnung, in den Speicherraum eingebracht werden und wird dann vom Speicherförderer sogleich weitertransportiert, wodurch an dieser Stelle Platz für nachfolgendes Erntegut geschaffen wird. Sofern an einer Stelle des Speicherförderers noch vergleichsweise wenig Erntegut geführt wird, kann nach einem Umlauf des Speicherförderers hier weiteres Erntegut hinzugefügt werden, so dass der Speicherraum sukzessive optimal gefüllt werden kann. Der Speicherförderer lässt sich mechanisch einfach und mit wenigen beweglichen Teilen realisieren, wie nachfolgend noch erläutert wird. Außerdem ist die äußere Begrenzung des Speicherraums bevorzugt durch eine starre Speicherwandung fester Größe bestimmt. Diese Speicherwandung kann ein Widerlager zum Komprimieren des Ernteguts durch den Speicherförderer bilden. Sie lässt sich robust und ohne bewegliche Teile realisieren. Beim Leeren des Speicherraums ist die in sich geschlossene Förderbahn des Speicherförderers wiederum von Vorteil, da wiederum an einer Stelle benachbart zur Speicheröffnung Erntegut abgegeben, d. h. entnommen, werden kann, wonach der Speicherförderer unmittelbar weiteres Erntegut an diese Stelle transportiert. Sofern nicht alles Erntegut an einer Stelle des Speicherförderers entnommen wurde, kann dies beim nächsten Umlauf geschehen. Auch das Entnehmen bzw. Abgeben des Ernteguts kann somit sukzessive, z.B. schichtweise, erfolgen.

Hinsichtlich des Einbringens von Erntegut in den Speicherraum und/oder der Abgabe von Erntegut aus dem Speicherraum bestehen unterschiedliche Möglichkeiten. So wäre es denkbar, dass die Speichervorrichtung selbst wenigstens einen dieser Vorgänge unterstützt. Eine besonders bevorzugte Ausführungsform sieht hingegen vor, dass die Übergabevorrichtung dazu eingerichtet ist, im Speichermodus Erntegut aus dem Zuführkanal zur Zwischenspeicherung in Richtung des Speicherraums zu führen und im Pressmodus von der Speichervorrichtung abgegebenes Erntegut zu übernehmen und durch den Zuführkanal in Richtung der Presskammer zu fördern. D.h. der Übergabevorrichtung kommt gewissermaßen eine dreifache Funktion zu. Zum einen dient sie im Pressmodus dazu, den "normalen" Erntegutstrom (von der Aufnahmevorrichtung) durch den Zuführkanal zur Presskammer zu unterstützen, d. h. insbesondere aufrechtzuerhalten. Des Weiteren führt sie im Speichermodus (aktiv und/oder passiv) Erntegut in Richtung des Speicherraums, was die Möglichkeit einschließt, dass sie es bis in den Speicherraum hineinführt. Man kann sagen, dass sie einen von der Aufnahmevorrichtung kommenden Aufnahme-Erntegutstrom gegenüber dem Pressmodus wenigstens teilweise, normalerweise vollständig, umlenkt oder umleitet. Sie ist dabei in beiden Modi im oder am Erntegutstrom angeordnet. Die dritte Funktion besteht darin, das Entleeren des Speicherraums zumindest zu unterstützen, indem die Übergabevorrichtung Erntegut aus dem Speicherraum übernimmt und durch den Zuführkanal zur Presskammer hin fördert. Dabei können sich während des Pressmodus wenigstens zeitweise der von der Aufnahmevorrichtung kommende Aufnahme-Erntegutstrom und ein aus dem Speicherraum kommender Speicher-Erntegutstrom zu einem Gesamt-Erntegutstrom vereinigen, welcher der Presskammer zugeführt wird. Anders ausgedrückt, ist die Rundballenpresse bevorzugt dazu eingerichtet, im Pressmodus wenigstens zeitweise einen von einer Aufnahmevorrichtung kommenden Aufnahme-Erntegutstrom mit einem von der Speichervorrichtung kommenden Speicher-Erntegutstrom zu einem Gesamt-Erntegutstrom zusammenzuführen und diesen der Presskammer zuzuführen. Die Aufnahmevorrichtung (z.B. eine Pick-up) ist dazu eingerichtet, Erntegut von einem Feld aufzunehmen und dem Zuführkanal zuzuführen.

Um die Konstruktion des Speicherförderers einfach und robust zu halten, sind die Speicherzinken bevorzugt starr mit dem Speicherförderer-Innenteil verbunden. Dementsprechend wird die Bewegung des Speicherförderer-Innenteils - abgesehen von einer möglicherweise gegebenen Elastizität der Speicherzinken - unmittelbar auf die Speicherzinken übertragen.

Allgemein ist der Speicherförderer umlaufend antreibbar, was grundsätzlich unterschiedliche Ausgestaltungen und hiermit verbundene Bewegungsbahnen ermöglicht. Eine bevorzugte Ausgestaltung sieht vor, dass der Speicherförderer um eine Speicherachse rotatorisch antreibbar ist, wobei die Speicherwandung wenigstens überwiegend rotationssymmetrisch zur Speicherachse ausgebildet ist. Der Speicherförderer rotiert also um die Speicherachse, welche bspw. zentral durch das o.g. Speicherförderer-Innenteil verlaufen kann. Er kann somit auch als Speicherrotor bezeichnet werden. Soweit der Speicherförderer in sich starr ausgebildet ist, bewegen sich sämtliche Teile und/oder Abschnitte desselben auf Kreisbahnen um die Speicherachse. Dies gilt insbesondere auch für die äußersten Punkte der Speicherzinken, die somit in dichtem Abstand an der Speicherwandung vorbeigeführt werden können, wenn diese ebenfalls rotationssymmetrisch zur Speicherachse ausgebildet ist. Insbesondere kann die Speicherwandung wenigstens abschnittsweise zylindrisch und/oder zylindermantelförmig ausgebildet sein, wobei die wenigstens eine Speicheröffnung einen Ausschnitt im Zylindermantel bildet.

Vorteilhaft weist der Speicherförderer eine Mehrzahl von bezüglich der Speicherachse zueinander axial und tangential versetzt angeordneten Zinkenkränzen auf, wobei jeder Zinkenkranz eine Mehrzahl von tangential zueinander versetzt angeordneten Speicherzinken aufweist. Die Speicherzinken, die einem Zinkenkranz zugeordnet sind, haben dabei bezüglich der Speicherachse normalerweise gleiche oder nur geringfügig voneinander abweichende axiale Positionen. Die Anzahl der Speicherzinken in einem Zinkenkranz kann unterschiedlich gewählt werden, normalerweise sind zwischen 3 und 10 Speicherzinken pro Zinkenkranz vorgesehen. Dabei ist eine Mehrzahl von Zinkenkränzen vorgesehen, von denen jeder in der Regel die gleiche Anzahl Speicherzinken aufweist. Die Zinkenkränzen sind axial zueinander versetzt. Zusätzlich sind die Zinkenkränze tangential zueinander versetzt, was bedeutet, dass die Zinken unterschiedlicher Zinkenkränze unterschiedliche tangentiale Position bezüglich der Speicherachse aufweisen. Letzteres kann insbesondere den Vorteil haben, dass so versetzten Zinken im Zuge der Rotation normalerweise zu unterschiedlichen Zeitpunkten mit einer bestimmten Menge Erntegut zusammenwirken, bspw. in das Erntegut einstechen. Auf diese Weise können kurzzeitig auftretende Kraft- und/oder Drehmomentspitzen vermieden werden. Insbesondere bei einer großen Anzahl von Zinkenkränzen ist es möglich, dass der Speicherförderer trotz des beschriebenen tangentialen Versatzes auch Paare oder Gruppen von Zinkenkränzen aufweist, die nicht zueinander versetzt sind. Diese machen allerdings jeweils nur einen geringen Teil der Gesamtzahl an Zinkenkränzen aus.

Bevorzugt sind zwischen benachbarten Zinkenkränzen axiale Zwischenräume ausgebildet, um ein Eingreifen der Übergabevorrichtung in den Speicherraum zu ermöglichen. D.h., benachbarte Zinkenkränze sind in axialer Richtung bezüglich der Speicherachse so weit beabstandet, dass zwischen ihnen jeweils einen Zwischenraum ausgebildet ist. Dieser erstreckt sich dann tangential umlaufend um die Speicherachse herum. In diesen Zwischenraum, der innerhalb des Speicherraums angeordnet ist, kann die Übergabevorrichtung bei geeigneter Ausgestaltung eingreifen, ohne dass sie im Zuge der Rotation des Speicherförderers mit diesem kollidiert. Durch das Eingreifen in den Speicherraum kann die Übergabevorrichtung zum einen Erntegut besser in den Speicherraum einbringen, zum anderen kann sie aber auch Erntegut besser aus dem Speicherraum herausfördern. Dies ist insbesondere vorteilhaft, wenn die Übergabevorrichtung wie oben erwähnt einen Übergaberotor aufweist, dessen Übergabezinken dann in die Zwischenräume eingreifen können.

Bevorzugt ist die Rundballenpresse dazu eingerichtet, den Speicherförderer sowohl im Pressmodus als auch im Speichermodus durchgehend in einer gleichbleibenden Speicherförderrichtung anzutreiben. D.h., der Speicherförderer wird weder angehalten, noch erfolgt eine Umkehrung der Antriebsrichtung, im Falle eines rotatorischen angetriebenen Speicherförderers also der Drehrichtung. Entsprechend vereinfacht sich die Ansteuerung des Speicherförderers und auch die Übertragung einer Antriebskraft auf denselben. Ein Motor sowie ggf. vorhandene Mittel zur Kraftübertragung können stets in einer Richtung arbeiten. Außerdem lässt sich bei Speicherzinken eine Förderseite definieren, die stets in Speicherförderrichtung vorne liegt und dementsprechend hinsichtlich Stabilität und Formgebung angepasst werden kann.

Weiterhin kann die Rundballenpresse dazu eingerichtet sein, den Speicherförderer durchgehend mit konstanter Geschwindigkeit anzutreiben. Die tatsächliche Geschwindigkeit des Speicherförderers kann auch in dieser Ausgestaltung Schwankung aufweisen, welche allerdings normalerweise geringfügig sind (bspw. weniger als 10 % oder weniger als 5 %). Solche Schwankungen können z.B. durch eine unterschiedliche Auslastung des Speicherförderers bedingt sein oder dadurch, dass zwischenzeitlich nicht genug Antriebsleistung zur Verfügung steht, da diese zwischen dem Speicherförderer und anderen Komponenten der Rundballenpresse aufgeteilt wird. Seitens der Rundballenpresse, bspw. seitens einer Steuereinheit derselben, ist jedoch vorgesehen, dass die Geschwindigkeit, z.B. die Rotationsgeschwindigkeit, gleich bleibt. Dies vereinfacht die Ansteuerung und die Erzeugung und/oder Übertragung der Antriebskraft für den Speicherförderer weiter.

Eine Ausführungsform sieht vor, dass die Speicherzinken auf einer Förderseite eine Rückwärtsneigung aufweisen, so dass die Kante des Speicherzinkens radial nach außen hin tangential zurückweicht. Die Förderseite entspricht dabei in tangentialer Richtung derjenigen Seite, die im Betriebszustand durchgehend oder zumindest die meiste Zeit in Bewegungsrichtung der Speicherzinken liegt. Die Begriffe "Vorwärtsneigung" bzw. "Rückwärtsneigung" bezeichnen hierbei jeweils eine Neigung gegenüber der axial-radialen Ebene. Eine Rückwärtsneigung bezeichnet eine Neigung, bei der die Kante wie beschrieben nach außen hin (also zu einem radial äußeren Ende hin) tangential zurückweicht. Eine Vorwärtsneigung wäre dementsprechend eine, bei der die Kante nach außen hin tangential vorspringt. Dies ist immer bezogen auf die Richtung, in die die jeweilige Kante tangential weist, also in diesem Fall die Bewegungsrichtung der Speicherzinken. Ohne hierauf beschränkt zu sein, ist diese Ausgestaltung besonders vorteilhaft in Kombination mit einer Übergabevorrichtung, die einen Übergaberotor mit Übergabezinken aufweist. Die zurückweichende Form begünstigt insbesondere das Herausfördern und/oder Herauskämmen von Erntegut zwischen den Speicherzinken.

Ebenso ist bevorzugt, dass die Speicherzinken auf einer der Förderseite gegenüberliegenden Rückseite eine betragsmäßig geringere Neigung aufweisen als auf der Förderseite. Dies bezieht sich wiederum auf die Richtung, in die die jeweilige Kante tangential weist, also in diesem Fall entgegen der Bewegungsrichtung der Speicherzinken. Die Neigung auf der Rückseite kann eine geringere Rückwärtsneigung sein oder eine Vorwärtsneigung, die allerdings schwächer ausgeprägt ist. Dies schließt auch die Möglichkeit ein, dass die Neigung null beträgt, also die Rückseite der Speicherzinken parallel zur axial-radialen Ebene verläuft. Wiederum ohne hierauf beschränkt zu sein, ist diese Ausgestaltung besonders vorteilhaft in Kombination mit einer Übergabevorrichtung, die einen Übergaberotor mit Übergabezinken aufweist. In diesem Fall begünstigt die geringe Neigung das Einfördern oder Hereindrücken von Erntegut in die Zwischenräume zwischen den Speicherzinken.

Während die Speicherwandung bevorzugt starr ausgebildet ist, bestehen hinsichtlich der Fördererwandung zwei Möglichkeiten, die jeweils eigene Vorteile aufweisen. Gemäß einer ersten Option ist die Fördererwandung insgesamt starr ausgebildet, so dass sie eine feste Begrenzung des Speicherraums mit konstanten Dimensionen bildet. In diesem Fall ist der Speicherförderer im Allgemeinen einfach und robust konstruiert. Gemäß einer anderen Ausführungsform ist die Fördererwandung wenigstens teilweise elastisch auslenkbar, wodurch die Größe des Speicherraums veränderbar ist. Wenigstens Teile der Fördererwandung sind elastisch nach innen, also von der Speicherwandung fort, auslenkbar, so dass zumindest lokal der Abstand zwischen Speicherwandung und Fördererwandung vergrößert werden kann. Zum einen könnte die Fördererwandung in sich elastisch ausgebildet sein. Zum anderen könnten in sich starre Teile der Fördererwandung elastisch gelagert und/oder aufgehängt sein. Die elastische Auslenkbarkeit kann den Aufbau des Speicherförderers verkomplizieren. Dafür kann es allerdings vorteilhaft sein, wenn elastische Rückstellkräfte über die Fördererwandung auf das Erntegut im Speicherraum wirken. Einerseits kann hierdurch unter Umständen eine gleichmäßigere Verdichtung des Ernteguts zwischen Fördererwandung und Außenwandung erreicht werden. Auch ist es möglich, dass die elastischen Rückstellkräfte im Pressmodus das Erntegut aktiv aus dem Speicherraum durch die wenigstens eine Speicheröffnung herausdrücken und somit die Entleerung des Speicherraums unterstützen.

Hinsichtlich der Anordnung der Speichervorrichtung relativ zum Zuführkanal bestehen unterschiedliche Möglichkeiten. Dabei ist allerdings zu bedenken, dass der Zuführkanal bei Rundballenpressen normalerweise weit unten angeordnet ist, entsprechend den Positionen der Aufnahmevorrichtung sowie des Eingangs zur Presskammer. Eine Anordnung der Speichervorrichtung unterhalb des Zuführkanals würde daher eine bedeutende Umgestaltung des Letzteren bedeuten. Eine Anordnung seitlich des Zuführkanals ist kaum möglich, da der Bauraum aufgrund einer sinnvollen Maximalbreite der Rundballenpresse hierfür nicht ausreicht. Es ist daher bevorzugt, dass die Speichervorrichtung wenigstens überwiegend oberhalb des Zuführkanals angeordnet ist. Diese Aussage bezieht sich auf die vertikale Richtung in einem Zustand, in dem die Rundballenpresse in bestimmungsgemäßer Weise aufgestellt ist. Es ist dabei möglich, dass Teile der Speichervorrichtung bezüglich der vertikalen Richtung auf gleicher Höhe mit Teilen des Zuführkanals liegen oder sogar niedriger angeordnet sind. Der überwiegende Teil der Speichervorrichtung ist allerdings höher angeordnet als der Zuführkanal. Es ist ebenfalls bevorzugt, dass die Speicheröffnung wenigstens anteilig abwärts weist, also an einen unteren Teil des Speicherraums angrenzt. Sofern sich wie oben beschrieben eine Speicherachse definieren lässt, ist die wenigstens eine Speicheröffnung bevorzugt niedriger angeordnet als die Speicherachse. Dies kann insofern auch vorteilhaft sein, als die Abgabe von Erntegut aus dem Speicherraum durch die Schwerkraft unterstützt wird.

Eine Ausführungsform sieht vor, dass der Zuführkanal einen in Gutflussrichtung vor der Übergabevorrichtung angeordneten, aufwärts zu wenigstens einer Speicheröffnung hin geneigten Leit-Bodenabschnitt aufweist. Der Leit-Bodenabschnitt bildet gewissermaßen ein Leitelement, durch das das Erntegut in Richtung auf die Speicheröffnung gelenkt wird. Diese Maßnahme kann bspw. bewirken, dass im Speichermodus nur eine geringere (oder ggf. keine) Antriebskraft seitens der Übergabevorrichtung notwendig ist, um den Aufnahme-Erntegutstrom zur Speicheröffnung hin zu lenken. Umgekehrt ist im Pressmodus die Antriebskraft der Übergabevorrichtung notwendig, um den Aufnahme-Erntegutstrom (sowie den Speicher-Erntegutstrom) von der Speicheröffnung fort und in Richtung der Presskammer zu lenken. Der entsprechende Leit-Bodenabschnitt ist normalerweise starr mit dem Rahmen der Rundballenpresse verbunden, wenngleich es prinzipiell denkbar wäre, dass er verstellbar am Rahmen angeordnet ist, um die Richtung des Erntegutstroms zu beeinflussen.

Da sich die Zeit für das Binden und/oder Auswerfen eines fertiggestellten Erntegutballens kaum verändern lässt, kann der Speicherraum währenddessen unterschiedlich weit gefüllt werden, je nachdem, wie viel Erntegut die Rundballenpresse in dieser Zeit aufnimmt und der Speichervorrichtung zuführt. Dies wiederum hängt zum einen von der auf dem Feld vorhandenen Erntegutmenge pro Fahrstrecke ab (also gewissermaßen der Erntegutdichte), zum anderen von der Fahrgeschwindigkeit der Rundballenpresse, die innerhalb gewisser Grenzen unterschiedlich gewählt werden kann. Da der Speicherraum nicht beliebig groß dimensioniert werden kann, kann es je nach Ausgestaltung potenziell dazu kommen, dass der Speicherraum überfüllt wird, also kein weiteres Erntegut mehr aufnehmen kann, bevor der Erntegutballen ausgeworfen wurde. Vorteilhaft ist die Rundballenpresse daher dazu eingerichtet, eine Überfüllung des Speicherraums zu erkennen und daraufhin einen der Speichervorrichtung zugeführten Aufnahme-Erntegutstrom automatisch wenigstens zu reduzieren. Der Aufnahme-Erntegutstrom, welcher von der Aufnahmevorrichtung kommt, soll wenigstens reduziert werden, was die Möglichkeit einschließt, dass er vollständig gestoppt wird. Normalerweise bedeutet dies, dass zeitweise weniger oder sogar kein Erntegut aufgenommen wird. Dies wiederum kann dadurch realisiert werden, dass die Fahrgeschwindigkeit der Rundballenpresse reduziert wird, ggf. auf null. Im Falle einer gezogenen Rundballenpresse ohne eigenen Antrieb kann die Rundballenpresse ein Signal an die Zugmaschine senden, das zu einer Reduzierung der Fahrgeschwindigkeit führt. Die Überfüllung des Speicherraums kann bspw. dadurch festgestellt werden, dass eine Antriebskraft und/oder ein Antriebsdrehmoment des Speicherförderers dauerhaft über einen vorgegebenen Grenzwert steigt. Auch wäre es denkbar, in der Speicherwandung und/oder in der Fördererwandung wenigstens einen Kraft- und/oder Drucksensor vorzusehen.

Die genannten Begriffe wurden bereits im Zusammenhang mit der erfindungsgemäßen Rundballenpresse erläutert und werden daher nicht nochmals erklärt. Vorteilhafte Ausgestaltungen der erfindungsgemäßen Speichervorrichtung entsprechen denen der erfindungsgemäßen Rundballenpresse.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer Schnittdarstellung einer erfindungsgemäßen Rundballenpresse, mit einer ersten Ausführungsform einer erfindungsgemäßen Speichervorrichtung, in einem Pressmodus;
- Fig. 2: eine Seitenansicht einer Schnittdarstellung der Rundballenpresse aus Fig.1 in einem Speichermodus;
- Fig. 3: eine Seitenansicht der Speichervorrichtung sowie einer Übergabevorrichtung der Rundballenpresse aus Fig. 1;
- Fig. 4: eine perspektivische Darstellung der Speichervorrichtung sowie der Übergabevorrichtung aus Fig. 3;
- Fig. 5: eine rückwärtige Ansicht der Speichervorrichtung sowie der Übergabevorrichtung aus Fig. 3; und
- Fig. 6: eine Seitenansicht einer zweiten Ausführungsform einer erfindungsgemäßen Speichervorrichtung.

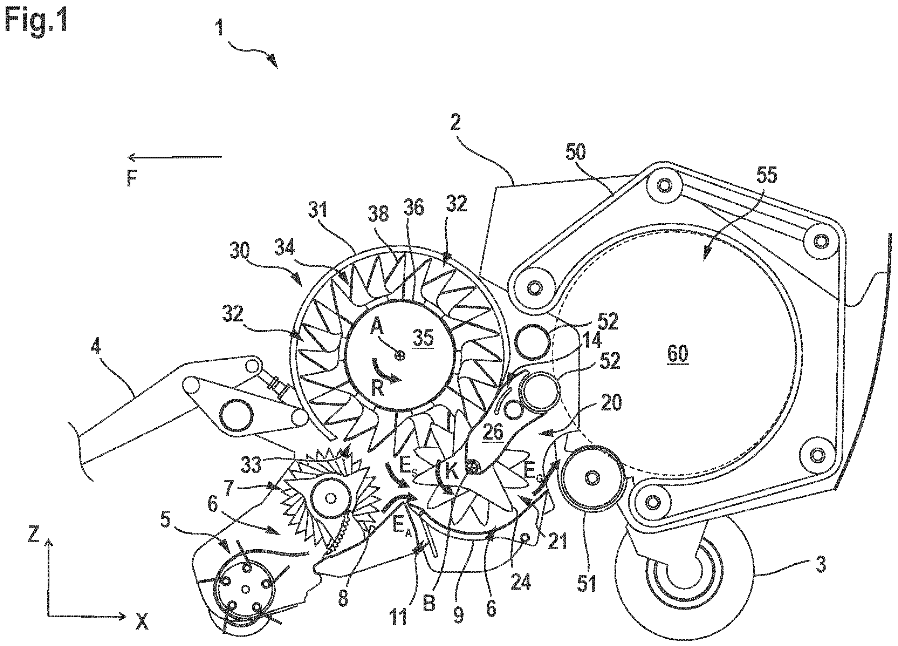

Fig. 1 zeigt eine Rundballenpresse 1 gemäß der vorliegenden Erfindung. Eine Längsachse X der Rundballenpresse 1 weist entgegen der Fahrtrichtung F nach hinten und eine Hochachse Z weist nach oben. An einem Rahmen 2 der Rundballenpresse 1
sind Laufräder 3 drehbar gelagert, auf welchen die Rundballenpresse 1 aufsteht. Die Rundballenpresse 1 ist in bekannter Weise dazu vorgesehen, von einer Zugmaschine, insbesondere einem Traktor (nicht dargestellt), gezogen zu werden, wozu sie eine Deichsel 4 aufweist. Die Erfindung ist aber nicht auf gezogene oder getragene Rundballenpressen 1 beschränkt, sondern umfasst auch selbstfahrende Rundballenpressen 1. In Fahrtrichtung F vorderseitig ist eine Pick-up 5 erkennbar, die im Betrieb (bezogen auf Fig. 1) im Uhrzeigersinn rotiert. Sie dient dazu, Erntegut, genauer gesagt Halmgut wie Stroh, Heu oder Gras, vom Boden aufzunehmen und als einen Aufnahme-Erntegutstrom E_{A} weiter in einen Zuführkanal 6 zu fördern, der zu einer Presskammer 55 führt. Von der Pick-up 5 gelangt das Erntegut durch den Zuführkanal 6 zu einem Schneidrotor 7, der entgegen dem Uhrzeigersinn rotiert. Er weist eine Mehrzahl von Zinken auf, die das Erntegut ergreifen, es im Zusammenwirken mit feststehenden Messern (ohne Bezugszeichen) schneiden und weiter entgegen der Fahrtrichtung F und leicht aufwärts durch den Zuführkanal 6 transportieren. Anstelle des Schneidrotors 7 könnte auch ein Förderrotor eingesetzt werden, der das Erntegut nur fördert und nicht zerkleinert.

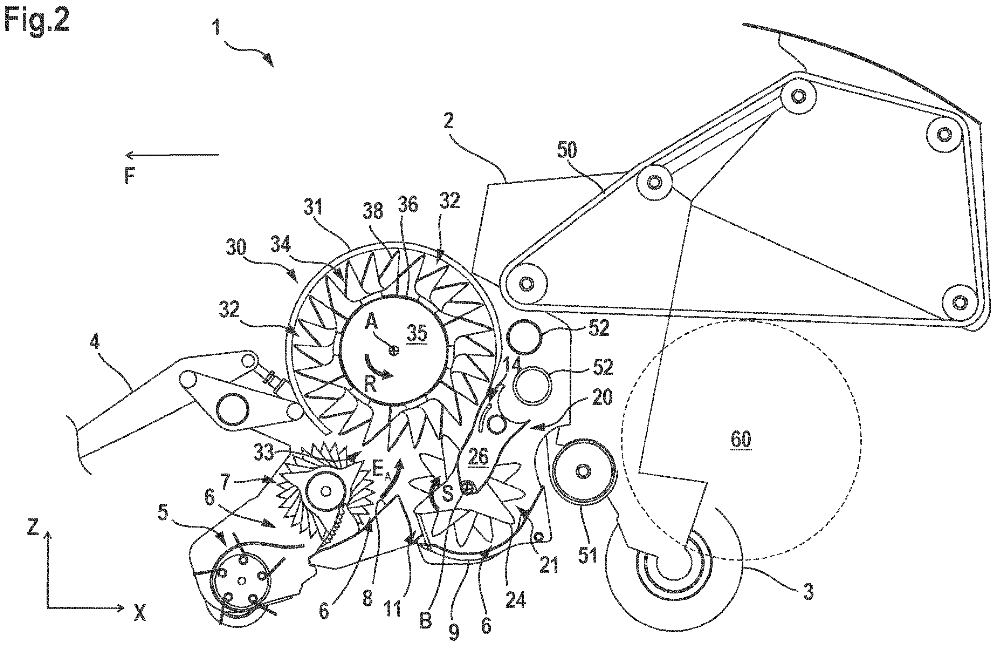

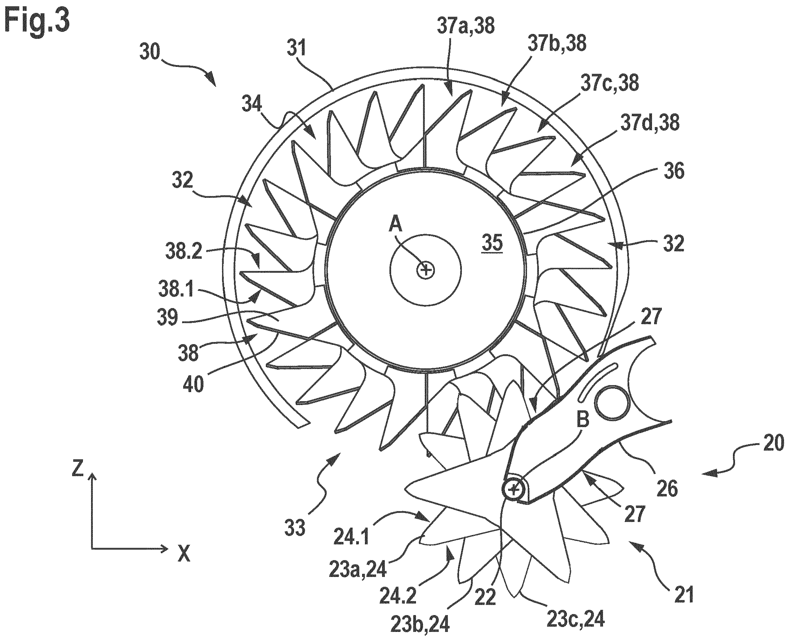

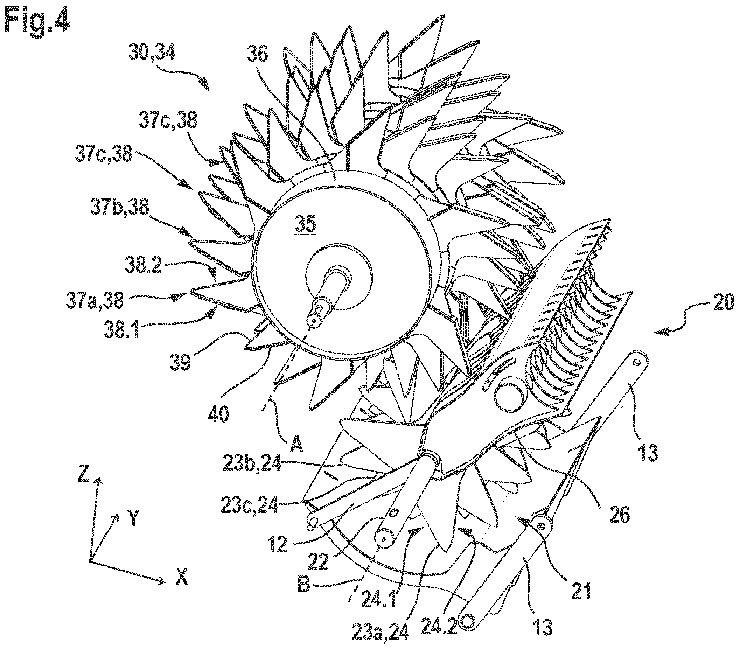

Auf dem Weg zur Presskammer 55 passiert der Aufnahme-Erntegutstrom E_{A} einen aufwärts geneigten Leit-Bodenabschnitt 8 unterhalb einer Speicheröffnung 33. Oberhalb der Speicheröffnung 33 schließt sich eine Speichervorrichtung 30 an, mit einer Speicherwandung 31, die einen Speicherraum 32 nach außen begrenzt. Die Speicherwandung 31 ist überwiegend rotationssymmetrisch zu einer Speicherachse A ausgebildet. Der Speicherraum 32 steht über die Speicheröffnung 33 mit dem Zuführkanal 6 in Verbindung. Ein als Speicherrotor ausgebildeter Speicherförderer 34 ist um die Speicherachse A rotatorisch antreibbar. Er weist ein überwiegend zylindrisches Speicherförderer-Innenteil 35 mit einer den Speicherraum 32 nach innen begrenzenden Fördererwandung 36 auf. Vom Speicherförderer-Innenteil 35 ragen eine Mehrzahl von Speicherzinken 38 zur Speicherwandung 31 hin ab. Die Struktur des Speicherförderers 34 und der Speicherzinken 38 ist in Fig. 3 - 5 besser erkennbar. Die Speicherzinken 38 sind in Speicherzinkenkränzen 37a-37d gruppiert, welche bezüglich der Speicherachse A zum einen axial beabstandet sind sowie zum anderen tangential versetzt sind. Im vorliegenden Beispiel weist jeder Speicherzinkenkranz 37a-37d sechs Speicherzinken 38 auf und axial benachbarte Speicherzinkenkränze 37a-37d sind jeweils um 15° tangential versetzt. Zwischen benachbarten Speicherzinkenkränzen 37a-37d sind jeweils axiale Zwischenräume 41 ausgebildet. Der einzelne Speicherzinken 38 weist einen radial-tangential verlaufenden Basisabschnitt 39 auf sowie einen hiermit verbundenen, axial verlaufenden Aufsatz 40, welche beide aus Stahlblech gefertigt sein können. Wie in Fig. 1 und 2 angedeutet, wird der Speicherförderer in einer Speicherförderrichtung R (in den Figuren im Gegenuhrzeigersinn) angetrieben. Eine bezüglich der Speicherförderrichtung R vorne liegende Förderseite 38.1 der Speicherzinken 38 weist eine Rückwärtsneigung auf, d.h. die Kante des jeweiligen Speicherzinkens 38 weicht radial nach außen hin tangential zurück. Im gezeigten Beispiel beträgt die Neigung gegenüber der radialen Richtung ca. 29°. Auf einer der Förderseite 38.1 gegenüberliegenden Rückseite 38.2 weisen die Speicherzinken 38 hingegen keine Neigung auf, d.h. sie verlaufen radial.

Im Weiteren passiert der Erntegutstrom einen bogenartig ausgebildeten Rotor-Bodenabschnitt 9, wobei er durch einen Übergaberotor 21 gefördert wird. Der Übergaberotor 21 ist Teil einer Übergabevorrichtung 20 und ist an einem gegenüber dem Rahmen 2 verstellbaren Rotorträger 26 drehbar gelagert, genauer gesagt ist er um eine parallel zur Querachse Y verlaufende Übergabeachse B antreibbar. Der Rotorträger 26 ist im Bereich des Übergaberotors 21 entlang einer Kreisbahn geführt verstellbar, die zur Achse des Schneidrotors 7 zentriert ist. In einem vom Übergaberotor 21 beabstandeten Bereich ist der Rotorträger 26 über eine erste Kulissenführung 11 bogenartig gegenüber dem Rahmen 2 geführt, und zwar derart, dass er immer dicht entlang der Kante der Speicherwandung 31 entlang geführt wird, welche die Speicheröffnung 33 begrenzt. Er bildet somit eine Verlängerung der Speicherwandung 31. Die Verstellung des Rotorträgers 26 wird durch einen hier nicht dargestellten Aktor bewirkt. Der Übergaberotor 21 weist eine Welle 22 auf, an der eine Mehrzahl von Übergabezinkenkränzen 23a-23c befestigt sind. Jeder Übergabezinkenkranz weist eine Mehrzahl von Übergabezinken 24 auf, in diesem Beispiel jeweils drei, die bezüglich der Übergabeachse B tangential versetzt angeordnet sind. Wie in der Zusammenschau von Fig. 3 bis 5 gut erkennbar ist, sind benachbarte Übergabezinkenkränze 23a-23c axial beabstandet und tangential zueinander versetzt, in diesem Fall um jeweils 30°. Die Übergabezinken 24 weisen auf einer in Speicherzuführrichtung S vorne liegenden Speicherzuführseite 24.1 eine stärkere Rückwärtsneigung auf als auf einer in Kammerzuführrichtung A vorne liegenden Kammerzuführseite 24.2. Im vorliegenden Beispiel beträgt die Neigung auf der Speicherzuführseite 24.1 in etwa 20° gegenüber der radialen Richtung, während sie auf der gegenüberliegenden Kammerzuführseite 24.2 nur etwa 17° beträgt.

Fig. 1 sowie 3 bis 5 zeigt einen Zustand, in welchem der Rotorträger 26 so gegenüber dem Rahmen 2 positioniert ist, dass der Übergaberotor 21 mit den Übergabezinken 24 in die Zwischenräume 41 und somit durch die Speicheröffnung 33 in den Speicherraum 32 eingreift. Ein vorderer Bereich des Rotor-Bodenabschnitts 9 ist über eine zweite Kulissenführung 14 am Rahmen 2 geführt und dort über erste Koppelstreben 12 mit der Welle 22 verbunden, wobei sich die Welle gegenüber der ersten Koppelstreben 12 frei drehen kann. Auf diese Weise bewegt sich der vordere Bereich, durch die zweite Kulissenführung 14 geführt, synchron mit der Welle 22 aufwärts und abwärts, wodurch ein wenigstens annähernd gleichbleibender Abstand zwischen dem Rotor-Bodenabschnitt 9 und den Übergabezinken 24 gewährleistet ist. Somit können sich die Übergabezinken 24 in vergleichsweise geringem Abstand über den Rotor-Bodenabschnitt 9 hinweg bewegen und somit das Erntegut im Zuführkanal 6 optimal erfassen.

In der Presskammer 55 erfolgen die eigentliche Ballenbildung und das Verpressen des Ernteguts zu einem Erntegutballen 60. Hierzu sind eine Starterwalze 51, zwei Presswalzen 52 sowie eine Mehrzahl von (senkrecht zur Zeichenebene nebeneinander angeordneten) endlosen Presselementen 50 (in diesem Fall Pressriemen) vorgesehen, die die Presskammer 55 definieren und eine variable Größe derselben ermöglichen. Statt der Pressriemen könnte aber auch z.B. ein Kettenstabförderer eingesetzt werden oder es könnte auch eine Presskammer 55 mit fester Größe vorgesehen sein. Die Starterwalze 51 ist gegenüber dem Rahmen 2 verstellbar, um bei Bedarf den Querschnitt des Zugangs zur Presskammer 55 vergrößern zu können. Ein hinterer Bereich des Rotor-Bodenabschnitts 9 ist über zweite Koppelstreben 13 mit der Achse der Starterwalze 51 verbunden, so dass er deren Bewegung folgt, wenn sie verstellt wird.

Fig.1 zeigt die Rundballenpresse 1 in einem Pressmodus, in welchem der Übergaberotor 21 das Erntegut durch den Zuführkanal 6 zur Presskammer 55 hin fördert. Im Pressmodus dreht sich der Übergaberotor 21 in einer Kammerzuführrichtung K, bezüglich Fig.1 im Gegenuhrzeigersinn. Dabei vereinigt sich ein aus der Speichervorrichtung 30 kommender Speicher-Erntegutstrom Es mit dem Aufnahme-Erntegutstrom E_{A} zu einem Gesamt-Erntegutstrom E_{G}, der der Presskammer 55 zugeführt wird. Dargestellt ist ein Zustand, in welchem der Erntegutballen 60 seine vorbestimmte Größe erreicht hat, wobei der Speicher-Erntegutstrom Es auch schon auf Null reduziert sein kann, da die Speichervorrichtung 30 geleert ist. Nachfolgend muss der Erntegutballen 60 über eine hier nicht dargestellte Bindevorrichtung mit Bindematerial versehen und anschließend aus der Presskammer 55 ausgeworfen werden. Während dieses Zeitraums kann kein Erntegut in der Presskammer 55 verarbeitet werden. Daher wechselt die Rundballenpresse 1 in einen Speichermodus, der in Fig. 2 dargestellt ist. Wesentlich hierbei ist, dass der Übergaberotor 21 die Drehrichtung wechselt und nunmehr in einer Speicherzuführrichtung S angetrieben wird, mit Bezug auf Fig. 2 also im Uhrzeigersinn. Der von der Pick-up 5 und dem Schneidrotor 7 kommende Aufnahme-Erntegutstrom E_{A} wird hierdurch nicht mehr in Richtung der Presskammer 55 weitergeleitet, sondern aufwärts durch die Speicheröffnung 33 in den Speicherraum 32. Die genannte Bewegung wird durch die Aufwärtsneigung des Leit-Bodenabschnitts 8 unterstützt.

Zu Anfang des Speichermodus ist die Übergabevorrichtung 20 in einer Position, die Fig. 1 entspricht. Hierdurch können die Übergabezinken 24 weit in den Speicherraum 32 eingreifen und so das Erntegut bis in einen Bereich nahe der Fördererwandung 36 transportieren. Im weiteren Verlauf kann der Übergaberotor 21 sukzessive aus dem Speicherraum 32 herausgefahren werden, während der Speicherraum 32 von innen nach außen gefüllt wird. Die Neigung der Speicherzinken 38 auf der Rückseite 38.2 ist dabei so auf die Neigung der Übergabezinken 24 auf einer in Speicherzuführrichtung S vorne liegenden Speicherzuführseite 24.1 abgestimmt, dass die Übergabezinken 24 das Erntegut entlang der Speicherzinken 38 in den Speicherraum 32 hineinschieben können. Die Verstellung der Übergabevorrichtung 20 wird fortgesetzt, bis die Übergabezinken 24 nicht mehr oder nur noch unwesentlich in die Zwischenräume 41 eingreifen, wie in Fig. 2 dargestellt.

Eine hier nicht dargestellte Steuereinheit der Rundballenpresse 1 überprüft im Speichermodus, ob eine eventuelle Überfüllung des Speicherraum 32 vorliegt. Hierzu kann ein Drehmoment überwacht werden, mit welchem der Speicherförderer 34 angetrieben werden muss. Ein plötzlicher starker Anstieg des Drehmoments deutet auf eine Überfüllung hin. Alternativ könnte an der Speicherwandung 31 ein federbelastetes Tastelement vorgesehen sein, das durch das Erntegut ausgelenkt wird, wenn der Speicherraum 32 überfüllt ist. Falls eine Überfüllung festgestellt wird, kann die Rundballenpresse automatisch angehalten werden, wodurch der Aufnahme-Erntegutstrom E_{A} auf Seiten der Pick-up 5 unterbrochen wird. Allerdings ist der Speicherraum 32 so dimensioniert, dass normalerweise Erntegut aufgenommen werden kann, bis der Erntegutballen 60 gebunden wurde und ausgeworfen werden kann, wie in Fig. 2 dargestellt.

Da die Presskammer 55 nun zur Bildung eines neuen Erntegutballens 60 bereitsteht, wechselt die Rundballenpresse wiederum in den Pressmodus, wozu der Übergaberotor 21 wiederum in Kammerzuführrichtung K angetrieben wird. Zu Beginn des Pressmodus entspricht die Position der Übergabevorrichtung 20 in etwa Fig. 2, so dass die Übergabezinken 21 nur wenig oder gar nicht in den Speicherraum 32 eingreifen. Auf diese Weise wird verhindert, dass der Speicherrotor 21 eine zu große Menge von Erntegut entgegen der Förderbewegung des kontinuierlich weiterlaufenden Speicherrotors 34 herausfördern muss. Erfasst wird zunächst nur eine dünne, bezüglich der Speicherachse A radial äußerste Schicht. Das Erntegut aus dieser Schicht wird durch die Speicheröffnung 33 abwärts in den Zuführkanal 6 und weiter entlang des Rotor-Bodenabschnitts 9 zur Presskammer 55 in gefördert. Der aus dem Speicherraum 32 kommende Speicher-Erntegutstrom Es vereinigt sich mit dem Aufnahme-Erntegutstrom E_{A}, der von der Pick-up 5 und dem Schneidrotor 7 kommt, zum Gesamt-Erntegutstrom E_{G}. Um den Speicherraum 32 schnell zu leeren und außerdem die kombinierten Erntegutströme effizient zur Presskammer 55 führen zu können, arbeitet der Übergaberotor 21 mit einer höheren Drehzahl als im Speichermodus, z.B. 100 U/min, normalerweise zwischen 80 und 150 U/min. In der Regel sollten die Übergabezinken 24 dabei eine Fördergeschwindigkeit von wenigstens 3 m/s erreichen. Beim Ausfördern wirken die Förderseiten 38.1 der Speicherzinken 38 sowie Kammerzuführseiten 24.2 der Übergabezinken 24, welche den Speicherzuführseiten 24.1 gegenüberliegen, gegeneinander auf das zwischengeordnete Erntegut ein. Die Rückwärtsneigung auf der Vorderseite 38.1 ist größer als die auf der Kammerzuführseite 24.2, d.h. diese sind so abgestimmt, dass das Erntegut herausgefördert werden kann, statt in den Speicherraum 32 zurückgedrückt zu werden. Im Laufe des Pressmodus wird die Übergabevorrichtung 20 wiederum sukzessive verstellt, so dass der Übergaberotor 21 nach und nach weiter in den Speicherraum 32 eingreift, wobei das gespeicherte Erntegut sukzessive von außen nach innen erfasst wird. Wie oben beschrieben, folgt der Rotor-Bodenabschnitt 9 sämtlichen Verstellvorgängen des Speicherrotors 21, so dass sich ein vorgesehener, annähernd gleichbleibender Abstand zum Speicherrotor 21 ergibt. Im hinteren Bereich des Rotor-Bodenabschnitts 9 kann auch z.B. zu Beginn des Pressmodus ein größerer Abstand eingestellt werden, um den insgesamt größeren Gesamt-Erntegutstrom E_{G} effizienter fördern zu können. Hierzu wird die Starterwalze 51 abgesenkt, was eine synchrone Absenkung des hinteren Bereichs des Rotor-Bodenabschnitts 9 bedingt.

Der Übergaberotor 21 wird im Speichermodus mit einer geringeren Drehzahl in Speicherzuführrichtung S angetrieben, während er im Pressmodus mit einer höheren Drehzahl in Kammerzuführrichtung K angetrieben wird. Die notwendige Richtungsumkehr wird durchgeführt, während die Speicherzinken 24 nicht in den Speicherraum 32 eingreifen. Demgegenüber wird Speicherrotor 34 durchgehend mit konstanter Geschwindigkeit in Speicherförderrichtung R angetrieben, was seine Steuerung sowie die gesamte Steuerung der Rundballenpresse 1 wesentlich vereinfacht.

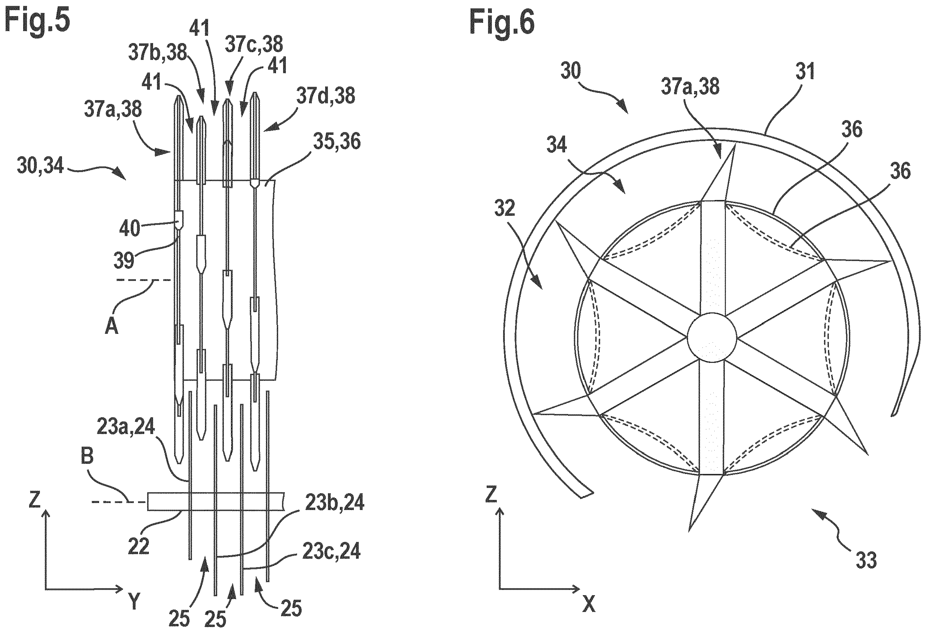

Fig. 6 zeigt eine zweite Ausführungsform einer erfindungsgemäßen Speichervorrichtung 30, die sich hinsichtlich der Speicherwandung 31 sowie der Speicheröffnung 33 nicht von der ersten Ausführungsform unterscheidet. Allerdings ist der Speicherförderer 34, welcher wiederum als um die Speicherachse A drehbarer Speicherrotor ausgebildet ist, nicht mit einer starren Fördererwandung 36 versehen. Vielmehr können einzelne Segmente der Fördererwandung 36 elastisch radial nach innen ausgelenkt werden, wie durch die gestrichelte Linie angedeutet ist. Hierdurch wird bei zunehmender Füllung des Speicherraums 32 eine optionale Vergrößerung von dessen Volumen ermöglicht. Die Speicherzinken 38, von denen hier zur Vereinfachung lediglich ein erster Zinkenkranz 37a dargestellt ist, sind hingegen positionsfest zueinander montiert und nicht auslenkbar. In diesem Beispiel ist jeweils ein tangential zwischen 2 Speicherzinken 38 eines Zinkenkranzes 37a-37d angeordneter Abschnitt der Fördererwandung 36 auslenkbar. Es wären aber auch verschiedene Abwandlungen denkbar, bspw. dass ein axial zwischen zwei Zinkenkränzen 37a-37d angeordneter Abschnitt elastisch auslenkbar ist. Um eine Überfüllung des Speicherraums 32 zu erkennen, könnte ein auslenkbarer Abschnitt an ein Sensorelement gekoppelt sein.

## Patentansprüche

1. Rundballenpresse (1), aufweisend einen zu einer Presskammer (55) führenden Zuführkanal (6), eine antreibbare Übergabevorrichtung (20), die dazu eingerichtet ist, in einem Pressmodus Erntegut durch den Zuführkanal (6) in Richtung der Presskammer (55) zu fördern, sowie eine Speichervorrichtung (30) mit einem Speicherraum (32) zur Zwischenspeicherung von Erntegut, wobei die Speichervorrichtung (30) eine Speicherwandung (31) aufweist, die den Speicherraum (32) nach außen begrenzt, welcher über wenigstens eine Speicheröffnung (33) mit dem Zuführkanal (6) in Verbindung steht, sowie einen antreibbaren Speicherförderer (34) zum umlaufenden Fördern von Erntegut innerhalb des Speicherraums (32), wobei die Speichervorrichtung (30) dazu vorgesehen ist, in einem Speichermodus Erntegut aus dem Zuführkanal (6) über wenigstens eine Speicheröffnung (33) aufzunehmen und im Pressmodus Erntegut über wenigstens eine Speicheröffnung (33) an den Zuführkanal (6) abzugeben, **dadurch gekennzeichnet, dass**
der Speicherförderer (34) ein Speicherförderer-Innenteil (35) mit einer den Speicherraum (32) nach innen begrenzenden Fördererwandung (36) aufweist sowie vom Speicherförderer-Innenteil (35) zur Speicherwandung (31) hin abragende Speicherzinken (38).

2. Rundballenpresse (1) nach Anspruch 1, **dadurch gekennzeichnet, dass** die Übergabevorrichtung (20) dazu eingerichtet ist, im Speichermodus Erntegut aus dem Zuführkanal (6) zur Zwischenspeicherung in Richtung des Speicherraums (32) zu führen und im Pressmodus von der Speichervorrichtung (30) abgegebenes Erntegut zu übernehmen und durch den Zuführkanal (6) in Richtung der Presskammer (55) zu fördern.

3. Rundballenpresse (1) nach einem der vorherigen Ansprüche, **dadurch gekennzeichnet, dass** der Speicherförderer (34) um eine Speicherachse (A) rotatorisch antreibbar ist, wobei die Speicherwandung (31) wenigstens überwiegend rotationssymmetrisch zur Speicherachse (A) ausgebildet ist.

4. Rundballenpresse (1) nach einem der vorherigen Ansprüche, **dadurch gekennzeichnet, dass** der Speicherförderer (34) eine Mehrzahl von bezüglich der Speicherachse (A) zueinander axial und tangential versetzt angeordneten Zinkenkränzen (37a-37d) aufweist, wobei jeder Zinkenkranz (37a-37d) eine Mehrzahl von tangential zueinander versetzt angeordneten Speicherzinken (38) aufweist.

5. Rundballenpresse (1) nach einem der vorherigen Ansprüche, **dadurch gekennzeichnet, dass** zwischen benachbarten Zinkenkränzen (37a-37d) axiale Zwischenräume (41) ausgebildet sind, um ein Eingreifen der Übergabevorrichtung (20) in den Speicherraum zu ermöglichen.

6. Rundballenpresse (1) nach einem der vorherigen Ansprüche, **dadurch gekennzeichnet, dass** die Speicherzinken (38) auf einer Förderseite (38.1) eine Rückwärtsneigung aufweisen, so dass die Kante des Speicherzinkens (38) radial nach außen hin tangential zurückweicht.

7. Rundballenpresse (1) nach einem der vorherigen Ansprüche, **dadurch gekennzeichnet, dass** die Speicherzinken (38) auf einer der Förderseite (38.1) gegenüberliegenden Rückseite (38.2) eine betragsmäßig geringere Neigung aufweisen als auf der Förderseite (38.1).

8. Rundballenpresse (1) nach einem der vorherigen Ansprüche, **dadurch gekennzeichnet, dass** die Fördererwandung (36) wenigstens teilweise elastisch auslenkbar ist, wodurch die Größe des Speicherraums (32) veränderbar ist.

9. Rundballenpresse (1) nach einem der vorherigen Ansprüche, **dadurch gekennzeichnet, dass** die Speichervorrichtung (30) wenigstens überwiegend oberhalb des Zuführkanals (6) angeordnet ist.

10. Rundballenpresse (1) nach einem der vorherigen Ansprüche, **dadurch gekennzeichnet, dass** der Zuführkanal (6) einen in Gutflussrichtung vor der Übergabevorrichtung (20) angeordneten, aufwärts zu wenigstens einer Speicheröffnung (33) hin geneigten Leit-Bodenabschnitt (8) aufweist.

11. Rundballenpresse (1) nach einem der vorherigen Ansprüche, **dadurch gekennzeichnet, dass** diese dazu eingerichtet ist, den Speicherförderer (34) sowohl im Pressmodus als auch im Speichermodus durchgehend in einer gleichbleibenden Speicherförderrichtung (R) anzutreiben.

12. Rundballenpresse (1) nach einem der vorherigen Ansprüche, **dadurch gekennzeichnet, dass** diese dazu eingerichtet ist, den Speicherförderer (34) durchgehend mit konstanter Geschwindigkeit anzutreiben.

13. Rundballenpresse (1) nach einem der vorherigen Ansprüche, **dadurch gekennzeichnet, dass** diese dazu eingerichtet ist, eine Überfüllung des Speicherraums (32) zu erkennen und daraufhin einen Erntegutstrom automatisch wenigstens zu reduzieren.

## Claims

1. Round baler (1) comprising a feed channel (6) leading to a pressing chamber (55), a driven transfer device (20) configured to convey crop material through the feed channel (6) toward the pressing chamber (55) in a pressing mode, and a storage device (30) with a storage space (32) for temporarily storing crop material, the storage device (30) having a storage wall (31) that externally delimits the storage space (32), which is connected to the feed channel (6) via at least one storage opening (33), and a driven storage conveyor (34) for circulating crop material within the storage space (32), the storage device (30) being designed to receive crop material from the feed channel (6) via at least one storage opening (33) in a storage mode and to discharge crop material to the feed channel (6) via at least one storage opening (33) in the pressing mode,
**characterized in that**
the storage conveyor (34) has a storage conveyor inner part (35) with a conveyor wall (36) that inwardly delimits the storage space (32), and storage tines (38) projecting from the storage conveyor inner part (35) toward the storage wall (31).

2. Round baler (1) according to claim 1, **characterized in that** the transfer device (20) is configured to guide crop material from the feed channel (6) toward the storage space (32) for temporary storage in the storage mode and to take crop material discharged from the storage device (30) and convey it through the feed channel (6) toward the pressing chamber (55) in the pressing mode.

3. Round baler (1) according to either of the preceding claims, **characterized in that** the storage conveyor (34) can be driven rotationally about a storage axis (A), the storage wall (31) being at least predominantly rotationally symmetrical to the storage axis (A).

4. Round baler (1) according to any of the preceding claims,
**characterized in that** the storage conveyor (34) has a plurality of tine rings (37a-37d) arranged axially and tangentially offset to each other with respect to the storage axis (A), each tine ring (37a-37d) having a plurality of storage tines (38) arranged tangentially offset to each other.

5. Round baler (1) according to any of the preceding claims,
**characterized in that** axial spaces (41) are formed between adjacent tine rings (37a-37d) to allow the transfer device (20) to engage in the storage space.

6. Round baler (1) according to any of the preceding claims,
**characterized in that** the storage tines (38) on a conveying side (38.1) have a backward inclination, such that the edge of the storage tine (38) recedes tangentially in a radially outward direction.

7. Round baler (1) according to any of the preceding claims,
**characterized in that** the storage tines (38) on a reverse side (38.2) opposite the conveying side (38.1) have a smaller inclination than on the conveying side (38.1).

8. Round baler (1) according to any of the preceding claims,
**characterized in that** the conveyor wall (36) is at least partially elastically deflectable, thereby allowing the size of the storage space (32) to be changed.

9. Round baler (1) according to any of the preceding claims,
**characterized in that** the storage device (30) is arranged at least predominantly above the feed channel (6).

10. Round baler (1) according to any of the preceding claims,
**characterized in that** the feed channel (6) has a guide bottom portion (8) arranged in the direction of material flow upstream of the transfer device (20), inclined upward toward at least one storage opening (33).

11. Round baler (1) according to any of the preceding claims,
**characterized in that** the round baler is configured to drive the storage conveyor (34) continuously in a consistent storage conveying direction (R) in both the pressing mode and the storage mode.

12. Round baler (1) according to any of the preceding claims,
**characterized in that** the round baler is configured to drive the storage conveyor (34) continuously at a constant speed.

13. Round baler (1) according to any of the preceding claims,
**characterized in that** the round baler is configured to detect an overfilling of the storage space (32) and to automatically, at the very least, reduce the crop material flow in response.

## Revendications

1. Presse à balles rondes (1), présentant un canal d'acheminement (6) menant à une chambre de pressage (55), un dispositif de transfert (20) pouvant être entraîné, lequel est configuré pour, dans un mode pressage, transporter la récolte à travers le canal d'acheminement (6) en direction de la chambre de pressage (55), ainsi qu'un dispositif de stockage (30) comportant un espace de stockage (32) pour le stockage intermédiaire de la récolte, dans laquelle le dispositif de stockage (30) présente une paroi de stockage (31) qui délimite l'espace de stockage (32) vers l'extérieur, lequel est raccordé au canal d'acheminement (6) par l'intermédiaire d'au moins une ouverture de stockage (33), ainsi qu'un transporteur de stockage (34) pouvant être entraîné et permettant de transporter de manière circulaire la récolte à l'intérieur de l'espace de stockage (32), dans laquelle le dispositif de stockage (30) est prévu pour, dans un mode stockage, recevoir la récolte provenant du canal d'acheminement (6) par l'intermédiaire d'au moins une ouverture de stockage (33) et, en mode pressage, déverser la récolte vers le canal d'acheminement (6) par l'intermédiaire d'au moins une ouverture de stockage (33),
**caractérisée en ce que**
le transporteur de stockage (34) présente une partie intérieure de transporteur de stockage (35) comportant une paroi de transporteur (36) qui délimite l'espace de stockage (32) vers l'intérieur, ainsi que des dents de stockage (38) faisant saillie de la partie intérieure de transporteur de stockage (35) vers la paroi de stockage (31).

2. Presse à balles rondes (1) selon la revendication 1, **caractérisée en ce que** le dispositif de transfert (20) est configuré pour, en mode stockage, mener la récolte hors du canal d'acheminement (6) en direction de l'espace de stockage (32) pour son stockage intermédiaire et, en mode pressage, réceptionner la récolte déversée par le dispositif de stockage (30) et la transporter à travers le canal d'acheminement (6) en direction de la chambre de pressage (55).

3. Presse à balles rondes (1) selon l'une des revendications précédentes, **caractérisée en ce que** le transporteur de stockage (34) peut être entraîné en rotation autour d'un axe de stockage (A), dans laquelle la paroi de stockage (31) est réalisée de manière à être au moins principalement symétrique en rotation par rapport à l'axe de stockage (A).

4. Presse à balles rondes (1) selon l'une des revendications précédentes, **caractérisée en ce que** le transporteur de stockage (34) présente une pluralité de couronnes à dents (37a-37d) disposées de manière à être décalées, tant axialement que tangentiellement, les unes par rapport aux autres par rapport à l'axe de stockage (A), dans laquelle chaque couronne à dents (37a-37d) présente une pluralité de dents de stockage (38) disposées de manière à être décalées tangentiellement les unes par rapport aux autres.

5. Presse à balles rondes (1) selon l'une des revendications précédentes, **caractérisée en ce que** des espaces intermédiaires (41) axiaux sont réalisés entre des couronnes à dents (37a-37d) adjacentes afin de permettre au dispositif de transfert (20) de pénétrer dans l'espace de stockage.

6. Presse à balles rondes (1) selon l'une des revendications précédentes, **caractérisée en ce que** les dents de stockage (38) présentent, sur un côté transport (38,1), une inclinaison vers l'arrière, de sorte que le bord de la dent de stockage (38) s'écarte radialement vers l'extérieur dans la direction tangentielle.

7. Presse à balles rondes (1) selon l'une des revendications précédentes, **caractérisée en ce que** les dents de stockage (38) présentent, sur un côté arrière (38,2) opposé au côté transport (38,1), une inclinaison inférieure en valeur absolue à celle du côté transport (38,1).

8. Presse à balles rondes (1) selon l'une des revendications précédentes, **caractérisée en ce que** la paroi de transporteur (36) peut être au moins partiellement déviée de manière élastique, moyennant quoi la taille de l'espace de stockage (32) peut être modifiée.

9. Presse à balles rondes (1) selon l'une des revendications précédentes, **caractérisée en ce que** le dispositif de stockage (30) est disposé au moins principalement au-dessus du canal d'acheminement (6).

10. Presse à balles rondes (1) selon l'une des revendications précédentes, **caractérisée en ce que** le canal d'acheminement (6) présente une section formant fond de guidage (8) disposée en amont du dispositif de transfert (20) dans le sens d'écoulement de matière et inclinée vers le haut vers au moins une ouverture de stockage (33).

11. Presse à balles rondes (1) selon l'une des revendications précédentes, **caractérisée en ce qu'**elle est configurée pour entraîner le transporteur de stockage (34) de manière continue dans un sens de transport de stockage (R) constant, tant en mode pressage qu'en mode stockage.

12. Presse à balles rondes (1) selon l'une des revendications précédentes, **caractérisée en ce qu'**elle est configurée pour entraîner le transporteur de stockage (34) de manière continue à une vitesse constante.

13. Presse à balles rondes (1) selon l'une des revendications précédentes, **caractérisée en ce qu'**elle est configurée pour détecter un débordement de l'espace de stockage (32) et, en conséquence, pour au moins réduire automatiquement un flux de récolte.
